# EUROPÄISCHE PATENTSCHRIFT

(11) **EP 3 524 479 B1**
(45) Veröffentlichungstag und Bekanntmachung des Hinweises auf die Patenterteilung: **09.06.2021**
(21) Anmeldenummer: 19154201.8
(22) Anmeldetag: 29.01.2019
(51) Int. Cl.: B60R 22/48

(54) **GURTAUFROLLER UND VERFAHREN ZUR ERMITTLUNG EINES ANSCHNALLZUSTANDS FÜR EIN KRAFTFAHRZEUG**
WEBBING RETRACTOR AND METHOD FOR DETERMINING WHETHER THE BUCKLE IS USED IN A VEHCLE
RÉTRACTEUR DE SANGLE ET PROCÉDÉE POUR DÉTECTER L'ÉTAT DE VERROUILLAGE D'UNE BOUCLE POUR UN VÉHICULE

(30) Priorität: 07.02.2018 DE 102018102724
(43) Veröffentlichungstag der Anmeldung: 14.08.2019
(73) Patentinhaber: Autoliv Development AB, 447 83 Vårgårda (SE)
(72) Erfinder: HINRICHS, Heiko, 25782 Welmbüttel (DE); PAWLOWSKI, Martin, 25587 Münsterdorf (DE); CLUTE, Günter, 25336 Elmshorn (DE); KOCK, Hans-Otto, 25368 Kiebitzreihe (DE)
(74) Vertreter: Müller Verweyen

(56) Entgegenhaltungen:
- CN-A- 107 284 404
- DE-A1-102007 014 772
- DE-A1-102010 029 790
- US-A1- 2010 125 392

## Beschreibung

Die vorliegende Erfindung betrifft einen Gurtaufroller für ein Kraftfahrzeug, umfassend eine Gurtwelle, einen Gurtauszugslängensensor zur Messung einer Gurtauszugslänge eines Gurtes, einen reversiblen Gurtstraffer zur reversiblen Vorstraffung des Gurtes über die Gurtwelle, eine elektronische Vorstraffsteuereinheit zur Steuerung des reversiblen Gurtstraffers und eine Einrichtung zur Ermittlung eines Anschnallzustands eines Insassen auf der Grundlage des Signals von dem Gurtauszugslängensensor.

Gurtsysteme in Fahrzeugen umfassen einen Gurtaufroller, ein fest mit dem Fahrzeug verbundenes Gurtschloss und einen Gurt mit einer auf dem Gurt verschiebbaren Gurtzunge, welche in dem Gurtschloss verriegelbar ist. Das Gurtschloss umfasst einen Verriegelungssensor, der dazu eingerichtet ist, ein Verriegelungssignal auszugeben, welches beispielsweise angibt, ob die Gurtzunge im Gurtschloss verriegelt ist.

Weiterhin ist es bekannt, den Gurtaufroller mit einem, von einem irreversiblen Gurtstraffer separaten, reversiblen Gurtstraffer zu versehen, welcher die Gurtspannung in einer Vor-Aufprall-Situation vor einem potentiellen Unfall erhöht, um die Bewegung eines Insassen an die Verzögerung des Fahrzeugs frühzeitig einzukoppeln. Der irreversible Gurtstraffer kann als pyrotechnische Einrichtung ausgebildet sein. Der reversible Gurtstraffer umfasst einen Elektromotor, welcher durch eine Kupplung mit der Gurtwelle gekoppelt ist.

Weiterhin weist der Gurtaufroller eine elektronische Vorstraff-Steuereinheit zur Steuerung des Elektromotors beziehungsweise des reversiblen Gurtstraffers auf.

Weiter umfasst der Gurtaufroller einen Gurtauszugslängensensor. Typischerweise ist dafür an der Gurtwelle ein magnetisches Rad mit einer Vielzahl von Magneten mit alternierender Polarität angeordnet, welche gleichmäßig entlang des Umfangs des Rades verteilt sind und eine gleiche Größe aufweisen. Der Gurtauszugslängensensor ist dem mit Magneten versehen Rad zugewandt beziehungsweise steht mit diesem in einer Messbeziehung. Der Gurtauszugslängensensor detektiert die Rotationsbewegung des Rades und mithin der Gurtwelle. Die Rotationsgeschwindigkeit oder der Rotationswinkel der Gurtwelle werden verwendet, um ein für die Gurtauszugslänge repräsentatives Signal zu erzeugen, welches ein essentielles Kriterium für Aktivierung des Elektromotors und zum Einziehen des Gurtes in einer Vor-Aufprall-Situation ist.

Der Erkennung des Anschnallzustandes eines Insassen in einem Fahrzeug wird eine große sicherheitstechnische Bedeutung beigemessen, da durch das Anschnallen die Verletzungsgefahr bei einem Unfall stark vermindert werden kann.

In Fahrzeugen, im Besonderen in teilweise oder gänzlich autonom fahrenden Fahrzeugen, ist es von großer Bedeutung, den Anschnallzustand zuverlässig zu detektieren, um autonome Fahrzustände, wie beispielsweise hochautonomes Fahren, zuzulassen. Der Anschnallzustand kann dabei beispielsweise angeben, ob ein Insasse ordnungsgemäß angeschnallt ist oder nicht.

In der DE 196 30 260 A1 sowie der DE 10 2012 223 147 A1 sind jeweils eine Anordnung zur Präsenzerkennung einer lebenden Person auf einem Fahrzeugsitz offenbart. Dazu wird aus einem Sitzbelegungssensor und einem Gurtschlossschalter auf die Präsenz der Person auf dem Fahrzeugsitz geschlossen. Die Präsenz der Person auf dem Fahrzeugsitz lässt aber noch nicht darauf schließen, ob die Person tatsächlich angeschnallt ist, da die Person den Gurt beispielsweise zwischen sich und dem Fahrzeugsitz führen oder eine falsche Gurtzunge verwenden kann.

Die DE 10 2008 042 399 A1 und die DE 10 2010 029 790 A1 sehen jeweils ein Rückhaltesystem für ein Fahrzeug vor, welches einen Gurtaufroller mit einem Gurtauszugslängensensor bereitstellt, welcher Informationen über die aktuelle Gurtauszugslänge erfasst. Weiter erfasst ein Gurtschlosssensor, ob eine Gurtzunge im Gurtschloss steckt. Die gesammelten Informationen werden von dem Gurtauszugslängensensor und dem Gurtschlosssensor an ein Airbagsteuergerät weitergeleitet. Die Weiterleitung sämtlicher dieser Informationen belastet die Datenübertragungskapazitäten im Fahrzeug.

Aus der Druckschrift CN 107 284 404 A ist ferner ein Gurtaufroller mit den Merkmalen des Oberbegriffs von Anspruch 1 bekannt. Zur Ermittlung des Anschnallzustandes wird hier das Signal eines Gurtauszugslängensensors verwendet.

Der Erfindung liegt die Aufgabe zugrunde, einen Gurtaufroller zur Ermittlung eines Anschnallzustands für ein Kraftfahrzeug bereitzustellen, die zuverlässig den Anschnallzustand eines Insassen detektieren und eine effektive Datenübertragung gewährleistet.

Die Erfindung löst die Aufgabe mit den Merkmalen der unabhängigen Ansprüche.

Auf Grundlage der Erfindung wird vorgeschlagen, dass die elektronische Vorstraffsteuereinheit in dem Gurtaufroller einen korrekten Anschnallzustand feststellt, wenn der Gurtschlosssensor ein Verriegelungssignal ausgibt, die vom Gurtauszugslängensensor gemessene Gurtauszugslänge einen definierten Grenzwert überschreitet und die Einrichtung eine dynamische Änderung der Gurtauszugslänge feststellt.

Die Erfindung hat erkannt, dass die ohnehin vorhandene elektronische Vorstraffsteuereinheit nicht nur zur Steuerung des reversiblen Gurtstraffers genutzt werden kann, sondern auch die Einrichtung zur Ermittlung des Anschnallzustands umfassen kann. Erfindungsgemäß ist die elektronische Vorstraffsteuereinheit dazu eingerichtet, die Messung der Gurtauszugslänge des Gurtes durch den Gurtauszugslängensensor in die Ermittlung des Anschnallzustandes einzubeziehen. Dadurch stehen vielfältige Möglichkeiten zur zuverlässigen Ermittlung des Anschnallzustandes bereit, was einen Kostenvorteil und eine effektive Bauraum- und Ressourcennutzung bietet.

Vorzugsweise ist die elektronische Vorstraffsteuereinheit zur Ausgabe eines den Anschnallzustand repräsentierenden Anschnallzustandssignals, insbesondere an einen digitalen Datenbus des Kraftfahrzeugs, eingerichtet. Da ein Großteil der Signale, beispielsweise vom Gurtauszugslängensensor, in dem Gurtstraffer intern zur Verfügung stehen und vorteilhaft nur das Anschnallzustandssignal, nicht jedoch beispielsweise das Gurtbandauszugslängensignal, auf den digitalen Datenbus ausgegeben wird, kann die Datenbuslast des Fahrzeugs entsprechend reduziert werden.

Das ermittelte Anschnallzustandssignal wird von der elektronischen Vorstraffsteuereinheit beispielsweise auf den digitalen Fahrzeug-Datenbus ausgegeben.

Bevorzugt ist die elektronische Vorstraffsteuereinheit zum Empfangen eines Signals von einem Gurtschlosssensor und zum Einbeziehen des Signals von dem Gurtschlosssensor in die Ermittlung des Anschnallzustandes eingerichtet, um die Zuverlässigkeit der Ermittlung des Anschnallzustandes zu erhöhen.

In einer vorteilhaften Ausführungsform ist die elektronische Vorstraffsteuereinheit zum Empfangen eines Signals von einer Innenraumerfassungseinrichtung und zum Einbeziehen des Signals von der Innenraumerfassungseinrichtung in die Ermittlung des Anschnallzustandes eingerichtet, um die Zuverlässigkeit der Ermittlung des Anschnallzustandes zu erhöhen. Die Innenraumerfassungseinrichtung kann vorteilhaft von einer Aufmerksamkeitserkennungseinrichtung zur Erkennung der Aufmerksamkeit eines Insassen gebildet sein, da diese regelmäßig eine auf den Insassen gerichtete Kamera umfasst, die dann ohne Mehraufwand auch zur Ermittlung des Anschnallzustandes verwendet werden kann.

Nach dem zuvor Gesagten verwendet die Einrichtung zur Ermittlung des Anschnallzustands lediglich das Signal von dem Gurtauszugslängensensor und vorteilhaft von dem Gurtschlosssensor, sowie in manchen Ausführungsformen von der Innenraumerfassungseinrichtung, ist jedoch vorteilhaft unabhängig von zusätzlichen komplexen Systemen wie beispielsweise Sitzbelegungssensoren, deren Signal für die Ermittlung des Anschnallzustands nicht benötigt wird.

Vorzugsweise ist die elektronische Vorstraffsteuereinheit zur Diskriminierung einer oder mehrerer der folgenden Anschnallzustände eingerichtet:
-- keine Gurtzunge im Gurtschloss eingesteckt;
-- falsche Gurtzunge im Gurtschloss eingesteckt;
-- Gurtzunge eingesteckt, Gurtband falsch geführt;
-- Gurtzunge eingesteckt, Gurtband um Rückenlehne gewickelt;
-- Insasse ordnungsgemäß angeschnallt.

Diese Ausführungsform bildet nicht unbedingt abschließende Klassifizierung möglicher Anschnallzustände, die einen ordnungsgemäßen und einen fehlerhaften Gebrauch beziehungsweise Missbrauch einer den Gurtaufroller umfassenden Sicherheitsvorrichtung anzeigen. Der fehlerhafte Gebrauch beziehungsweise Missbrauch wird vorzugsweise durch einen oder mehrere der Anschnallzustände "keine Gurtzunge im Gurtschloss eingesteckt", "falsche Gurtzunge im Gurtschloss eingesteckt", "Gurtzunge eingesteckt, Gurtband falsch geführt" oder "Gurtzunge eingesteckt, Gurtband um Rückenlehne oder Kopfstütze gewickelt" repräsentiert.

Zu jedem der vorgenannten Anschnallzustände korrespondiert vorzugsweise ein entsprechendes Anschnallzustandssignal. Vorteilhaft kann eine Anzeige vorgesehen sein, die dem Fahrer oder einem Insassen jeden der vorgenannten Anschnallzustände unterschiedlich anzeigt, z.B. per Farbkodierung. Die Anzeige umfasst mindestens unterschiedliche Darstellungen für die Zustände "ordnungsgemäß angeschnallt" (beispielsweise grün) und "nicht ordnungsgemäß angeschnallt" (beispielsweise rot). Die Klassifizierung der Anschnallzustände ist nicht an den obigen Wortlaut gebunden.

In einer vorteilhaften Weiterbildung stellt die elektronische Vorstraffsteuereinheit einen fehlerhaften bzw. nicht ordnungsgemäßen Anschnallzustand fest, wenn der Gurtschlosssensor kein Verriegelungssignal ausgibt. Dies ist insbesondere dann der Fall, wenn die Gurtzunge der Sicherheitsvorrichtung nicht in das Gurtschloss eingesteckt ist.

Vorzugsweise stellt die elektronische Vorstraffsteuereinheit einen fehlerhaften bzw. nicht ordnungsgemäßen Anschnallzustand fest, wenn zwar der Gurtschlosssensor ein Verriegelungssignal ausgibt, jedoch die vom Gurtauszugslängensensor gemessene Gurtauszugslänge null ist, oder der Gurtauszugslängensensor im Ruhezustand ist. Dies ist beispielsweise der Fall, wenn eine falsche Gurtzunge in das entsprechende Gurtschloss eingesteckt ist. Eine falsche Gurtzunge kann beispielsweise eine als Ersatzteil gelieferte, nicht zum Rückhaltesystem gehörige isolierte Gurtzunge sein, oder die Gurtzunge eines zu einem anderen Sitzplatz gehörenden Rückhaltesystems, beispielsweise wenn die Gurtzunge des Beifahrergurts in das Fahrergurtschloss eingesteckt ist oder umgekehrt. Die gemessene Gurtauszugslänge null gibt dann an, dass der Gurt noch voll eingezogen ist und daher nicht bis zum Gurtschloss reichen kann.

Des Weiteren stellt die elektronische Vorstraffsteuereinheit einen fehlerhaften bzw. nicht ordnungsgemäßen Anschnallzustand fest, wenn zwar der Gurtschlosssensor ein Verriegelungssignal ausgibt, jedoch die vom Gurtauszugslängensensor gemessene Gurtauszugslänge einen definierten Grenzwert unterschreitet. Dies ist beispielsweise der Fall, wenn das Gurtband falsch geführt ist. Zum Beispiel kann der Gurt entlang der Rückenlehne des entsprechenden Sitzes, d.h. zwischen Rückenlehne und Insasse, oder über einen leeren Sitz geführt sein.

Die elektronische Vorstraffsteuereinheit ist zum Ermitteln der dynamischen Gurtauszugslängenänderung und deren Einbeziehung in die Ermittlung des Anschnallzustandes eingerichtet, um die Zuverlässigkeit der Ermittlung des Anschnallzustandes zu erhöhen. Erfindungsgemäß werden bei der Ermittlung des Anschnallzustands also dynamische Änderungen der Gurtauszugslänge berücksichtigt.

Insbesondere stellt die elektronische Vorstraffsteuereinheit einen fehlerhaften Anschnallzustand fest, wenn der Gurtauszugslängensensor ein zeitlich unveränderliches Signal ausgibt, das keine dynamischen Gurtlängenänderungen indiziert. Dieses Kriterium berücksichtigt, dass bei ordnungsgemäß angelegtem Gurtband sich die Gurtauszugslänge ständig, oder jedenfalls innerhalb einer vorbestimmten Zeitdauer, mindestens geringfügig ändert, hervorgerufen durch Bewegungen und Atmung des Insassen sowie ggf. die Fahrdynamik. Auf diese Weise können auch nicht ordnungsgemäße Anschnallzustände festgestellt werden, bei denen die Gurtauszugslänge den oben genannten vorbestimmten Schwellwert überschreitet, beispielsweise wenn das Gurtband um die Rückenlehne oder die Kopfstütze gewickelt ist oder die Gurtauszugslänge auf sonstige Weise auf eine den Schwellwert überschreitende Länge fixiert ist.

Bevorzugt sind der Gurtauszugslängensensor und die elektronische Vorstraffsteuereinheit über eine von dem digitalen Datenbus des Fahrzeugs separate Signalleitung verbunden, um eine sichere, effektive und schnelle Kommunikation des Anschnallzustandes zu gewährleisten und den digitalen Datenbus zu entlasten. Demnach sind der Gurtauszugslängensensor und die elektronische Vorstraffsteuereinheit vorteilhaft nicht über den digitalen Datenbus des Fahrzeugs verbunden.

Die Erfindung betrifft des Weiteren eine Sicherheitsvorrichtung für hochautonomes Fahren eines Kraftfahrzeugs, wobei die Sicherheitsvorrichtung zum Zulassen eines Selbstfahrmodus des Kraftfahrzeuges auf der Grundlage des von dem Gurtaufroller empfangenen ermittelten Anschnallzustands eingerichtet ist.

Die Erfindung wird im Folgenden anhand bevorzugter Ausführungsformen unter Bezugnahme auf die beigefügten Figuren erläutert. Dabei zeigt
- Fig. 1: einen Schnitt durch eine Ausführungsform eines Gurtaufrollers; und
- Fig. 2: eine schematische Darstellung einer Ausführungsform eines an eine Sicherheitsvorrichtung angeschlossenen Gurtaufrollers.

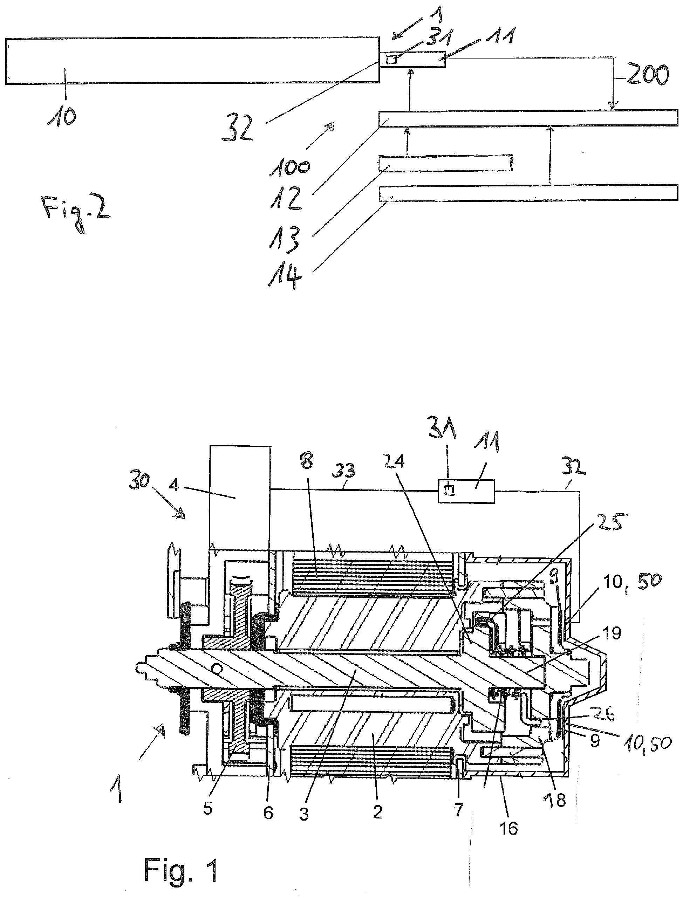

Figur 1 zeigt einen Schnitt durch einen Gurtaufroller 1 mit einem Gehäuse 16 und mit Befestigungselementen 6, 7 zur Befestigung des Gurtaufrollers 1 an einer fahrzeugfesten Struktur. Der Gurtaufroller 1 umfasst eine Gurtwelle 2, um welche ein Gurt 8 gewickelt ist, und einen reversiblen Gurtstraffer 30 mit einen Elektromotor 4, welcher direkt oder mittels einer Kraftübertragungseinrichtung kraftübertragend mit der Gurtwelle 2 verbunden ist. Die Gurtwelle 2 umfasst eine zentrale Öffnung, durch die sich ein Rotor 3 erstreckt. An dem Rotor 3 ist ein Antriebsrad 5 angeordnet, das mit dem Elektromotor 4 vorzugsweise über ein nicht gezeigtes Getriebe in Wirkverbindung steht. Eine Scheibe 18 ist mit der Gurtwelle 2 verbunden. Die Scheibe 18 kann auch ein Teil der Gurtwelle 2 sein.

An einem Zapfen 19 des Rotors 3 ist eine Feder 21 angeordnet, welche in einem Windungsabschnitt den Zapfen 19 umgibt. Zwei Enden 25, 26 der Feder 21 erstrecken sich axial in zwei entgegengesetzte Richtungen von dem Windungsabschnitt weg. Die Feder 21 wird durch den Zapfen 19 in Position gehalten und erstreckt sich mit ihrem ersten Ende 25 in eine Aussparung eines Bundes 24 des Rotors 3 und mit ihrem anderen Ende 26 in eine Aussparung der Scheibe 18. Daher ist die Feder umfänglich mit ihrem ersten Ende 25 am Rotor 3 und mit ihrem zweiten Ende 26 an der Welle 2 beziehungsweise der Scheibe 18 fixiert. Die Feder 21 ermöglicht eine relative Bewegung zwischen der Gurtwelle 2 und dem Rotor 3 bei gleichzeitiger Spannung oder Entspannung der Feder 21.

Der Gurtaufroller 1 umfasst ein an der Scheibe 18 angeordnetes magnetisches Rad 9 mit einer Vielzahl von Magneten, welches so angeordnet ist, dass das Rad 9 rotationsfest mit der Gurtwelle 2 verbunden ist. Die Magnete sind vorzugsweise als Magnete identischer Bauart ausgeführt und an der Mantelfläche des Rades 9 angeordnet. Das Rad 9 ist konzentrisch zur Gurtwelle 2 angeordnet, so dass die Magnete ebenfalls konzentrisch zur Gurtwelle 2 angeordnet sind. Die Magnete sind mit alternierender Abfolge von Nord- und Südpolen angeordnet, welche bei einer Drehbewegung ein in axialer Richtung alternierendes Magnetfeld außerhalb der Scheibe 18 hervorrufen.

Der Gurtaufroller 1 umfasst einen Gurtauszugslängensensor 10, welcher beispielsweise zwei Messfühler 50, vorzugsweise zwei Hall-Sonden umfasst und gehäusefest so angeordnet ist, dass die Messfühler 50 den Magneten des Rades 9 zugewandt sind. In diesem Ausführungsbeispiel ist der Gurtauszugslängensensor 10 am Gehäuse 16 des Gurtaufrollers 1 angeordnet. Die Messfühler 50 sind mit einem definierten Abstand voneinander entlang der Umfangsrichtung des Rades 9 positioniert. Dies erlaubt eine Detektion der Drehrichtung der Gurtwelle 2, indem eine Phasenverschiebung zwischen den Messfühler 50 ermittelt wird.

Wenn die Feder 21 durch eine erste Relativbewegung zwischen Rotor 3 und Gurtwelle 2 gespannt wird, wird die in der Feder 21 gespeicherte Energie verwendet, um eine zweite Relativbewegung zwischen der Gurtwelle 2 und dem Rotor 3 zu initiieren, welche durch den Gurtauszugslängensensor 10 messbar ist. Der Gurtauszugslängensensor 10 erzeugt dabei ein Signal, welches von der Richtung der Relativbewegung abhängt und dazu verwendet werden kann den Elektromotor 4 zu steuern und/oder zu regeln und den Elektromotor so zu aktivieren, dass die Gurtwelle 2 in die den Gurt straffende Richtung gedreht wird.

Der Gurtauszugslängensensor 10 ist mit einer elektronischen Vorstraffsteuereinheit 11 über eine separate bzw. dedizierte Signalleitung 32 verbunden. Die Vorstraffsteuereinheit 11 ist mit einem separaten Signalleiter 33 mit dem Elektromotor 4 verbunden, um den Elektromotor 4 zu steuern und/oder zu regeln und somit auf die Spannung des Gurtes nehmen zu können. Eine Einrichtung 31 zur Ermittlung eines Anschnallzustands ist in der elektronischen Vorstraffsteuereinheit 11 angeordnet.

Das gezeigte Ausführungsbeispiel des Gurtaufrollers 1 kann durch andere Ausführungsformen ersetzt werden. Bedeutsam für die ordnungsgemäße Funktionsweise ist die fahrzeugfeste Aufhängung des Gurtaufrollers 1 in einem Rahmen, die Gurtwelle 2, der Gurtauszugslängensensor 10 zur Erfassung der Gurtauszugslänge und die Vorstraffsteuereinheit 11 zu Steuerung des Elektromotors 4 des reversiblen Gurtstraffers 30.

Figur 2 zeigt eine schematische Ausführungsform einer Sicherheitsvorrichtung 100 für ein Kraftfahrzeug mit einem Gurtaufroller 1.

Der gezeigte Ausschnitt der Sicherheitsvorrichtung 100 kann in die Erkennung des Anschnallzustandes eines Insassen involviert sein und umfasst zu diesem Zweck den Gurtauszugslängensensor 10 und die Anschnallzustandserkennungs-Einrichtung 31 in der Vorstraffsteuereinheit 11. Die Vorstraffsteuereinheit 11 und somit die Sicherheitsvorrichtung 100 sind an einen digitalen Datenbus 12 des Fahrzeugs angeschlossen. Der digitale Datenbus 12 ist beispielsweise ein CAN-Bus und/oder LIN-Bus und dient der Kommunikation diverser elektronischer Einrichtungen im Fahrzeug.

Der digitale Datenbus 12 empfängt Daten von einem Gurtschlosssensor 13 und optional von einer Innenraumerfassungseinrichtung 14. Vom Gurtschloss 13 kann der digitale Datenbus 12 beispielsweise ein Verriegelungssignal empfangen, was unter anderem für die Ermittlung des Anschnallzustands maßgeblich ist. Die Innenraumerfassungseinrichtung 14, vorzugsweise eine Aufmerksamkeitserkennungseinrichtung mit mindestens einer Kamera, sendet ggf. ebenfalls Daten an den digitalen Datenbus 12. Die Innenraumerfassungseinrichtung kann ein oder mehrere Mikrofone und/oder Kameras umfassen, um Audio- und/oder Videodaten aufnehmen zu können.

Der Gurtaufroller 1 umfasst einen Gurtauszugslängensensor 10 und eine daran gekoppelte elektronische Vorstraffsteuereinheit 11. Der Gurtauszugslängensensor 10 ist mit der elektronischen Vorstraffsteuereinheit 11 über eine separate bzw. dedizierte Signalleitung 32 verbunden.

Die elektronische Vorstraffsteuereinheit 11 ist an den digitalen Datenbus 12 des Fahrzeugs angeschlossen und kann mit diesen Daten austauschen; insbesondere können Daten von der elektronische Vorstraffsteuereinheit 11 an den digitalen Datenbus 12 gesendet werden und/oder von dort Daten empfangen werden.

Vorzugsweise ist der Gurtauszugslängensensor 10 nicht direkt bzw. unmittelbar mit dem digitalen Datenbus 12 verbunden, sondern lediglich mittelbar über die elektronische Vorstraffsteuereinheit 11. Des Weiteren muss es nicht erforderlich sein, dass die Vorstraffsteuereinheit 11 das Signal des Gurtauszugslängensensors 10 an den Datenbus 12 ausgibt, da sämtliche Verarbeitung des Signals des Gurtauszugslängensensors 10 vorteilhaft in der Vorstraffsteuereinheit 11 stattfinden kann.

Der Datenaustausch zwischen dem Gurtauszugslängensensor 10 und der elektronischen Vorstraffsteuereinheit 11 beeinträchtigt die Kapazitäten beziehungsweise die Auslastung des digitalen Datenbus 12 nicht, da dieser über die Signalleitung 32 erfolgt.

Eine Einrichtung 31 zur Ermittlung des Anschnallzustands ist in der elektronischen Vorstraffsteuereinheit 11 angeordnet. Um den Anschnallzustand zuverlässig zu ermitteln, empfängt die elektronischen Vorstraffsteuereinheit 11 durch die Signalleitung 32 von dem Gurtauszugslängensensor 10 Signale über die Gurtauszugslänge. Durch zeitliche Analyse dieser Signale kann die Vorstraffsteuereinheit 11 daraus vorteilhaft die zeitliche bzw. dynamische Änderung der Gurtauszugslänge ermitteln.

Die von dem Gurtauszugslängensensor 10 und von dem digitalen Datenbus 12 bereitgestellten Daten des Gurtschlosssensors 13 und optional der Innenraumerfassungseinrichtung 14 werden in der elektronischen Vorstraffsteuereinheit 11 von der Einrichtung 31 zur Ermittlung eines Anschnallzustands dazu verwendet, um den Anschnallzustand festzustellen.

Die Einrichtung 31 zur Ermittlung eines Anschnallzustands in der elektronischen Vorstraffsteuereinheit 11 kann einen Speicher und/oder einen Prozessor zur Datenverarbeitung umfassen oder nutzen. Der Speicher kann beispielsweise dynamisch eine Zeitreihe der durch den Gurtauszugslängensensor 10 bereitgestellten Gurtauszugslängen zur Auswertung durch den Prozessor Zwischenspeichern. Der Prozessor ermittelt dann anhand der von dem Gurtauszugslängensensor 10 und von dem digitalen Datenbus 12 bereitgestellten Daten den Anschnallzustand und gibt dann ein den Anschnallzustand repräsentierendes Anschnallzustandssignal 200 aus. Das Anschnallzustandssignal 200, das beispielsweise den Anschnallzustand klassifiziert, kann dann von der elektronischen Vorstraffsteuereinheit 11 an den digitalen Datenbus 12 ausgegeben werden.

Der digitale Datenbus 12 leitet das Anschnallzustandssignal 200 an beispielsweise eine Fahrerinformationseinheit, ein Airbagsteuergerät und/oder eine andere Steuereinheit, beispielsweise eine Steuereinheit für Fahrerassistenz und/oder für autonomes Fahren weiter. Die Fahrerinformationseinheit kann entsprechend des Anschnallzustandssignals 200 eine Meldung in einem Display im Innenraum des Fahrzeugs anzeigen. Die Steuereinheit kann beispielsweise dazu dienen, einen autonomen Fahrmodus zu freizugeben oder nicht freizugeben.

In einer vorteilhaften Ausführungsform ist die Arbeitsweise der Einrichtung 31 zur Erkennung des Anschnallzustandes die Folgende.

Stellt die Anschnallzustandsermittlungseinrichtung 31 fest, dass die vom Gurtauszugslängensensor 10 gemessene Gurtauszugslänge null ist oder einen vorgegebenen Grenzwert unterschreitet, stellt sie einen entsprechenden, nicht ordnungsgemäßen Anschnallzustand fest gibt diesen an den digitalen Datenbus 12 aus.

Stellt die Einrichtung 31 fest, dass sich die vom Gurtauszugslängensensor 10 gemessene Gurtauszugslänge nicht dynamisch ändert, stellt sie einen entsprechenden, nicht ordnungsgemäßen Anschnallzustand fest gibt diesen an den digitalen Datenbus 12 aus.

Erkennt die Einrichtung 31 aufgrund des Signals von dem Gurtschlosssensor 13, dass keine Gurtzunge im Gurtschloss steckt beziehungsweise verriegelt ist, stellt sie einen entsprechenden, nicht ordnungsgemäßen Anschnallzustand fest gibt diesen an den digitalen Datenbus 12 aus.

Stellt die Anschnallzustandsermittlungseinrichtung 31 fest, dass eine Gurtzunge im Gurtschloss steckt und verriegelt ist und die vom Gurtauszugslängensensor 10 gemessene Gurtauszugslänge einen vorgegebenen Grenzwert überschreitet und sich dynamisch ändert, stellt sie einen entsprechenden, ordnungsgemäßen Anschnallzustand fest gibt diesen an den digitalen Datenbus 12 aus.

Sofern ein Signal der Innenraumerfassungseinrichtung 14 in der Ermittlung des Anschnallzustands berücksichtigt wird, und stellt die auf den dem Gurtschloss zugeordneten Sitz gerichtete Innenraumerfassungseinrichtung 14 durch Bildverarbeitung fest, ob sich ein Insasse auf dem entsprechenden Sitz befindet. Erkennt die Anschnallzustandserfassungseinrichtung 31 auf der Grundlage des Signals von der Innenraumerfassungseinrichtung 14, dass sich kein Insasse auf dem entsprechenden Sitz befindet, stellt sie einen entsprechenden, nicht ordnungsgemäßen Anschnallzustand fest und gibt diesen an den digitalen Datenbus 12 aus.

Die Reihenfolge der oben beschriebenen Prüfschritte in der Anschnallzustandserfassungseinrichtung 31 kann geeignet gewählt werden und ist nicht an die obige Reihenfolge gebunden.

Der Gurtaufroller 1 weist einen pyrotechnischen Straffer auf, der in den Figuren nicht gezeigt ist. Dieser wird vorteilhaft von einer eigenständigen, d.h. von der Steuereinheit 11 separaten Steuereinheit, beispielsweise einer Airbagsteuereinheit gesteuert, die ebenfalls in den Figuren nicht gezeigt ist.

## Patentansprüche

1. Gurtaufroller (1) für ein Kraftfahrzeug, umfassend
- eine Gurtwelle (2),
- einen Gurtauszugslängensensor (10) zur Messung einer Gurtauszugslänge eines Gurtes (8),
- einen reversiblen Gurtstraffer (30) zur reversiblen Vorstraffung des Gurtes (8) über die Gurtwelle (2),
- eine elektronische Vorstraffsteuereinheit (11) zur Steuerung des reversiblen Gurtstraffers (30),
- eine Einrichtung (31) zur Ermittlung eines Anschnallzustands eines Insassen auf der Grundlage des Signals von dem Gurtauszugslängensensor (10), wobei
- die Einrichtung (31) zur Ermittlung eines Anschnallzustands in der elektronischen Vorstraffsteuereinheit (11) angeordnet ist,
**dadurch gekennzeichnet, dass**
- die elektronische Vorstraffsteuereinheit (11) einen korrekten Anschnallzustand feststellt, wenn ein Gurtschlosssensor (13) ein Verriegelungssignal ausgibt, die vom Gurtauszugslängensensor (10) gemessene Gurtauszugslänge einen definierten Grenzwert überschreitet und die Einrichtung (31) eine dynamische Änderung der Gurtauszugslänge feststellt.

2. Gurtaufroller nach Anspruch 1, **dadurch gekennzeichnet,**
**dass**
- die elektronische Vorstraffsteuereinheit (11) zur Ausgabe eines den Anschnallzustand repräsentierenden Anschnallzustandssignals (200), insbesondere auf einen digitalen Datenbus (12), eingerichtet ist.

3. Gurtaufroller nach einem der vorherigen Ansprüche, **dadurch gekennzeichnet, dass**
- die elektronische Vorstraffsteuereinheit (11) zum Empfangen eines Signals von dem Gurtschlosssensor (13) und zum Einbeziehen des Signals von dem Gurtschlosssensor (13) in die Ermittlung des Anschnallzustandes eingerichtet ist.

4. Gurtaufroller nach einem der vorherigen Ansprüche, **dadurch gekennzeichnet, dass**
- die elektronische Vorstraffsteuereinheit (11) zum Empfangen eines Signals von einer Innenraumerfassungseinrichtung (14) und zum Einbeziehen des Signals von der Innenraumerfassungseinrichtung (14) in die Ermittlung des Anschnallzustandes eingerichtet ist.

5. Gurtaufroller nach Anspruch 4, **dadurch gekennzeichnet, dass**
- die Innenraumerfassungseinrichtung (14) von einer Aufmerksamkeitserkennungseinrichtung zur Erkennung der Aufmerksamkeit eines Insassen gebildet ist.

6. Gurtaufroller nach einem der vorherigen Ansprüche, **dadurch gekennzeichnet, dass**
- die elektronische Vorstraffsteuereinheit (11) zur Diskriminierung einer oder mehrerer der folgenden Anschnallzustände eingerichtet ist:
-- keine Gurtzunge im Gurtschloss eingesteckt;
-- falsche Gurtzunge im Gurtschloss eingesteckt;
-- Gurtzunge eingesteckt, Gurtband falsch geführt;
-- Gurtzunge eingesteckt, Gurtband um Rückenlehne oder Kopfstütze gewickelt;
-- Insasse ordnungsgemäß angeschnallt.

7. Gurtaufroller nach einem der vorangehenden Ansprüche,
**dadurch gekennzeichnet, dass**
- die elektronische Vorstraffsteuereinheit (11) einen fehlerhaften Anschnallzustand feststellt, wenn der Gurtschlosssensor (13) kein Verriegelungssignal ausgibt.

8. Gurtaufroller nach einem der vorangehenden Ansprüche,
**dadurch gekennzeichnet, dass dadurch gekennzeichnet, dass**
- die elektronische Vorstraffsteuereinheit (11) einen fehlerhaften Anschnallzustand feststellt, wenn die vom Gurtauszugslängensensor (10) gemessene Gurtauszugslänge null ist oder einen definierten Grenzwert unterschreitet.

9. Gurtaufroller nach einem der vorangehenden Ansprüche,
**dadurch gekennzeichnet, dass**
- die elektronische Vorstraffsteuereinheit (11) einen fehlerhaften Anschnallzustand feststellt, wenn der Gurtauszugslängensensor (10) ein zeitlich unveränderliches Signal ausgibt, das keine dynamischen Gurtlängenänderungen indiziert.

10. Gurtaufroller nach einem der vorherigen Ansprüche, **dadurch gekennzeichnet, dass**
- der Gurtauszugslängensensor (10) und die elektronische Vorstraffsteuereinheit (11) über ein von dem digitalen Datenbus (12) des Fahrzeugs separate Signalleitung (32) verbunden sind.

11. Sicherheitsvorrichtung (100) für Fahrerassistenz und/oder autonomes Fahren eines Kraftfahrzeugs, umfassend einen Gurtaufroller nach einem der vorangehenden Ansprüche.

12. Sicherheitsvorrichtung (100) nach Anspruch 11, **dadurch gekennzeichnet, dass** die Sicherheitsvorrichtung (100) zum Zulassen eines Selbstfahrmodus des Kraftfahrzeuges auf der Grundlage des von einem Gurtaufroller (1) nach einem der vorangehenden Ansprüche empfangenen ermittelten Anschnallzustands eingerichtet ist.

13. Sicherheitsvorrichtung (100) nach Anspruch 11 oder 12, **dadurch gekennzeichnet, dass** eine Anzeige für den Fahrer oder einen Insassen vorgesehen ist, die verschiedene Anschnallzustände unterschiedlich anzeigt, z.B. per Farbkodierung.

## Claims

1. Belt retractor (1) for a motor vehicle, comprising
- a belt shaft (2),
- a belt extension length sensor (10) for measuring a belt extension length of a belt (8),
- a reversible belt tensioner (30) for reversible pretensioning of the belt (8) over the belt shaft (2),
- an electronic pretensioning control unit (11) for controlling the reversible belt tensioner (30),
- a means (31) for determining a seat belt fastening state of an occupant on the basis of the signal from the belt extension length sensor (10),
- the means (31) for determining a seat belt fastening state being arranged in the electronic pretensioning control unit (11),
**characterized in that**
- the electronic pretensioning control unit (11) detects a correct seat belt fastening state when a belt buckle sensor (13) outputs a locking signal, the belt extension length measured by the belt extension length sensor (10) exceeds a defined limit value and the means (31) detects a dynamic change in the belt extension length.

2. Belt retractor according to claim 1, **characterized in that**
- the electronic pretensioning control unit (11) is designed to output a seat belt fastening state signal (200) representing the seat belt fastening state, in particular to a digital data bus (12).

3. Belt retractor according to either of the preceding claims, **characterized in that**
- the electronic pretensioning control unit (11) is designed to receive a signal from the belt buckle sensor (13) and to include the signal from the belt buckle sensor (13) in the determination of the seat belt fastening state.

4. Belt retractor according to any of the preceding claims, **characterized in that**
- the electronic pretensioning control unit (11) is designed to receive a signal from an interior detection means (14) and to include the signal from the interior detection means (14) in the determination of the seat belt fastening state.

5. Belt retractor according to claim 4, **characterized in that**
- the interior detection means (14) is formed by an attention identification means for identifying the attention of an occupant.

6. Belt retractor according to any of the preceding claims, **characterized in that**
- the electronic pretensioning control unit (11) is designed to distinguish between one or more of the following seat belt fastening states:
- no belt tongue inserted in the belt buckle;
- wrong belt tongue inserted in the belt buckle;
- belt tongue inserted, belt strap guided incorrectly;
- belt tongue inserted, belt strap wrapped around backrest or headrest;
- occupant's seat belt correctly fastened.

7. Belt retractor according to any of the preceding claims, **characterized in that**
- the electronic pretensioning control unit (11) detects an incorrect seat belt fastening state when the belt buckle sensor (13) does not output a locking signal.

8. Belt retractor according to any of the preceding claims, **characterized in that**
- the electronic pretensioning control unit (11) detects an incorrect seat belt fastening state when the belt extension length measured by the belt extension length sensor (10) is zero or falls below a defined limit value.

9. Belt retractor according to any of the preceding claims, **characterized in that**
- the electronic pretensioning control unit (11) detects an incorrect seat belt fastening state when the belt extension length sensor (10) outputs a signal that does not vary over time and does not indicate any dynamic belt length changes.

10. Belt retractor according to any of the preceding claims, **characterized in that**
- the belt extension length sensor (10) and the electronic pretensioning control unit (11) are connected via a signal line (32) separate from the digital data bus (12) of the vehicle.

11. Safety device (100) for driver assistance and/or autonomous driving of a motor vehicle, comprising a belt retractor according to any of the preceding claims.

12. Safety device (100) according to claim 11, **characterized in that** the safety device (100) is designed to allow a self-driving mode of the motor vehicle on the basis of the determined seat belt fastening state received from a belt retractor (1) according to any of the preceding claims.

13. Safety device (100) according to either claim 11 or claim 12, **characterized in that** a display is provided for the driver or an occupant which indicates different seat belt fastening states in different ways, e.g. by color coding.

## Revendications

1. Enrouleur de ceinture (1) pour véhicule automobile, comprenant
- un arbre de ceinture (2),
- un capteur de longueur de déroulement de ceinture (10) pour mesurer une longueur de déroulement d'une ceinture (8),
- un tendeur de ceinture réversible (30) pour une prétension réversible de la ceinture (8) sur l'arbre de ceinture (2),
- une unité de commande de prétension électronique (11) pour commander le tendeur de ceinture réversible (30),
- un appareil (31) de détermination d'un état d'attachement d'un passager sur la base du signal provenant du capteur de longueur de déroulement de ceinture (10),
- l'appareil (31) de détermination d'un état d'attachement étant agencé dans l'unité de commande de prétension électronique (11),
**caractérisé en ce que**
- l'unité de commande de prétension électronique (11) détecte un état d'attachement correct si un capteur de boucle de ceinture (13) émet un signal de verrouillage, la longueur de déroulement de ceinture mesurée par le capteur de longueur de déroulement de ceinture (10) dépasse une valeur limite définie et l'appareil (31) détecte un changement dynamique de la longueur de déroulement de ceinture.

2. Enrouleur de ceinture selon la revendication 1, **caractérisé en ce que**
- l'unité de commande de prétension électronique (11) est configurée pour émettre un signal d'état d'attachement (200) représentant l'état d'attachement, en particulier à un bus de données numériques (12).

3. Enrouleur de ceinture selon l'une des revendications précédentes, **caractérisé en ce que**
- l'unité de commande de prétension électronique (11) est configurée pour recevoir un signal provenant du capteur de boucle de ceinture (13) et pour inclure le signal provenant du capteur de boucle de ceinture (13) dans la détermination de l'état d'attachement.

4. Enrouleur de ceinture selon l'une des revendications précédentes, **caractérisé en ce que**
- l'unité de commande de prétension électronique (11) est configurée pour recevoir un signal provenant d'un appareil de détection d'habitacle (14) et pour inclure le signal provenant de l'appareil de détection d'habitacle (14) dans la détermination de

5. Enrouleur de ceinture selon la revendication 4, **caractérisé en ce que**
- l'appareil de détection d'habitacle (14) est formé par un appareil de reconnaissance d'attention pour reconnaître l'attention d'un passager.

6. Enrouleur de ceinture selon l'une des revendications précédentes, **caractérisé en ce que**
- l'unité de commande de prétension électronique (11) est configurée pour discriminer un ou plusieurs des états d'attachement suivants :
- pas de languette de ceinture insérée dans la boucle de ceinture ;
- mauvaise languette de ceinture insérée dans la boucle de ceinture ;
- languette de ceinture insérée, sangle de ceinture mal guidée ;
- languette de ceinture insérée, sangle de ceinture enroulée autour du dossier ou de l'appui-tête ;
- le passager s'est correctement attaché.

7. Enrouleur de ceinture selon l'une des revendications précédentes, **caractérisé en ce que**
- l'unité de commande de prétension électronique (11) détecte un état d'attachement incorrect si le capteur de boucle de ceinture (13) n'émet pas de signal de verrouillage.

8. Enrouleur de ceinture selon l'une des revendications précédentes, **caractérisé en ce que**
- l'unité de commande de prétension électronique (11) détecte un état d'attachement incorrect si la longueur de déroulement de ceinture mesurée par le capteur de longueur de déroulement de ceinture (10) est nulle ou passe au-dessous d'une valeur limite définie.

9. Enrouleur de ceinture selon l'une des revendications précédentes, **caractérisé en ce que**
- l'unité de commande de prétension électronique (11) détecte un état d'attachement incorrect si le capteur de longueur de déroulement de ceinture (10) émet un signal invariant dans le temps et n'indiquant aucun changement dynamique de longueur de ceinture.

10. Enrouleur de ceinture selon l'une des revendications précédentes, **caractérisé en ce que**
- le capteur de longueur de déroulement de ceinture (10) et l'unité de commande de prétension électronique (11) sont connectés par l'intermédiaire d'une ligne de signal (32) séparée du bus de données numériques (12) du véhicule.

11. Dispositif de sécurité (100) destiné à l'assistance à la conduite et/ou à la conduite autonome d'un véhicule automobile, comprenant un enrouleur de ceinture selon l'une des revendications précédentes.

12. Dispositif de sécurité (100) selon la revendication 11, **caractérisé en ce que** le dispositif de sécurité (100) est configuré pour permettre un mode de conduite autonome du véhicule automobile sur la base de l'état d'attachement déterminé et reçu depuis un enrouleur de ceinture (1) selon l'une des revendications précédentes.

13. Dispositif de sécurité (100) selon la revendication 11 ou 12, **caractérisé en ce qu'**un affichage est prévu pour le conducteur ou pour un passager, lequel affiche divers états d'attachement de différentes manières, par exemple au moyen d'un code couleur.
